# EUROPÄISCHE PATENTSCHRIFT

(11) **EP 3 174 741 B1**
(45) Veröffentlichungstag und Bekanntmachung des Hinweises auf die Patenterteilung: **20.06.2018**
(21) Anmeldenummer: 15736813.5
(22) Anmeldetag: 08.07.2015
(51) Int. Cl.: B60C 23/04, H01Q 1/32, H01Q 1/22

(54) **ANTENNE FÜR EINEN EMPFÄNGER ODER SENDER IN EINEM KRAFTFAHRZEUG, INSBESONDERE FÜR EIN REIFENZUSTANDSÜBERWACHUNGSSYSTEM**
ANTENNA FOR A RECEIVER OR TRANSMITTER IN A MOTOR VEHICLE, IN PARTICULAR FOR A TIRE-STATUS MONITORING SYSTEM
ANTENNE POUR RÉCEPTEUR OU ÉMETTEUR DANS UN VÉHICULE AUTOMOBILE, EN PARTICULIER POUR SYSTÈME DE SURVEILLANCE D'ÉTAT DE PNEUMATIQUE

(30) Priorität: 30.07.2014 DE 102014214928
(43) Veröffentlichungstag der Anmeldung: 07.06.2017
(73) Patentinhaber: Alligator Ventilfabrik GmbH, 89537 Giengen (DE)
(72) Erfinder: MARKERT, Christian, 89542 Herbrechtingen (DE)
(74) Vertreter: Dr. Weitzel & Partner
(86) Internationale Anmeldenummer: PCT/EP2015/065560
(87) Internationale Veröffentlichungsnummer: WO 2016/015962

(56) Entgegenhaltungen:
- DE-A1-102013 211 541
- JP-A- 2011 188 365

## Beschreibung

Die vorliegende Erfindung betrifft eine Antenne für einen Empfänger oder Sender in einem Kraftfahrzeug, insbesondere für ein Reifenzustandsüberwachungssystem, welches beispielsweise eingerichtet ist, den Luftdruck und/oder die Temperatur und/oder sonstige Größen, beispielsweise die Drehrichtung oder Drehgeschwindigkeit (Anzahl der Umdrehungen pro Zeiteinheit) in einem Reifen zu erfassen.

Reifenzustandsüberwachungssysteme, insbesondere Reifendrucküberwachungssysteme, sind in einer Vielzahl von Ausführungsformen bekannt. Diese ermöglichen die Überwachung eines Zustands, beispielsweise des Druckes oder der Temperatur im Reifen mittels eines in einem oder an einem Reifen positionierten Sensors, der die gewünschte Zustandsgröße, beispielsweise den Luftdruck des Reifens, erfasst und mittels eines angeschlossenen oder integrierten Senders an eine Empfangseinrichtung außerhalb des Reifens im Fahrzeug übermittelt. Die Empfangseinrichtung kann die übermittelten Daten weiterleiten oder selbst auswerten, sodass unerwünschte Zustände des Reifens, beispielsweise ein zu geringer Reifenluftdruck erfasst werden können und entsprechende Maßnahmen, insbesondere Warnmeldungen vorgenommen beziehungsweise erzeugt werden können.

Für eine reibungslose Kommunikation zwischen der zentralen oder verteilt im Fahrzeug positionierten Empfangseinrichtung und dem oder den Sensoren in den Reifen ist es notwendig, dass die vom Sender im Reifen ausgesendeten Signale sicher von der Empfangseinrichtung erfasst werden. Hierfür weist die Empfangseinrichtung zumindest einen Empfänger mit einer Antenne auf, welche die Signale aus dem oder den Reifen erfasst. Wenn die zentrale oder dezentrale Empfangseinrichtung auch Signale an den oder die Sensoren beziehungsweise deren zugehörige Steuereinrichtung in den Reifen übersenden soll, weist sie neben dem Empfänger einen Sender auf, der dieselbe Antenne oder eine zusätzliche Antenne zur Signalübertragung verwendet. Ferner können weitere Antennen vorgesehen sein, mit denen die Empfangseinrichtung beispielsweise mit im Fahrzeug oder außerhalb des Fahrzeugs positionierten Überwachungsvorrichtungen oder Zentralen kommuniziert.

Die Antenne des Empfängers oder Senders in der Empfangseinrichtung oder auch am anderen Ende der Kommunikationsverbindung im beziehungsweise am Reifen kann prinzipiell in verschiedenen bekannten Antennenformen, wie Stabantenne, gewickelter Spule oder in Form einer Schleife ausgeführt sein. Die vorliegende Erfindung hingegen betrifft nur Antennen in Schleifenform, die auf Magnetfelder reagieren beziehungsweise primär magnetische Felder erzeugen. Bei einer solchen Antenne mit einer elektrisch leitenden Schleife ist eine Fläche zum Durchtritt elektromagnetischer Wellen vorgesehen, die in einer Wechselwirkung mit einem elektrischen Stromfluss durch die Schleife stehen. Die Schleife weist zur Signalübertragung eine Anschlussseite auf, über welche ein elektrischer Strom induktiv oder durch wenigstens einen elektrischen Anschluss in die Schleife einleitbar oder aus dieser ausleitbar ist.

Bei herkömmlichen Antennen mit einer solchen elektrischen Schleife ist die Schleife innerhalb einer oder auf einer Leiterplatte parallel zu dieser positioniert, was zum einen hinsichtlich des notwendigen Bauraums des Empfängers oder Senders günstig ist und zum anderen eine einfache Herstellung ermöglicht. Darüber hinaus ist die elektrisch leitende Schleife geschützt gegen Beschädigungen. Allerdings werden in der Praxis entsprechende Sender oder Empfänger häufig in der Nähe oder auf einem Fahrzeugrahmen montiert, der aus Metall besteht. Dieser Fahrzeugrahmen hat naturgemäß eine Auswirkung auf die von der Schleife zu empfangenen elektromagnetischen Wellen, was zu Störungen beziehungsweise schlechten Empfangs- oder Sendeverhalten führen kann.

Aus JP 2004 345 364 A ist ein Reifenkontrollsystem für ein Fahrzeug bekannt, bei dem eine mit einer Überwachungseinheit verbundener Antenne die Funkwellen von in jedem Reifen befindlichen Sensoren empfängt, wobei eine Mehrzahl möglicher verwendeter Antennenformen beschrieben wird, darunter auch eine elektrisch leitende, rechteckförmige Schleifenantenne, die auf einer Seite mit Anpasselementen beziehungsweise Anschlüssen versehen ist.

DE 10 2013 211 541 A1 offenbart eine Antenne für einen Empfänger oder Sender in einem Kraftfahrzeug gemäß dem Oberbegriff von Anspruch 1.

Zum weiteren Stand der Technik wird verwiesen auf JP 2011 188 365 A.

Aus DE 10 2005 007 325 A1 ist eine Antenne für eine in der Radfelge angebrachte Reifendrucksendevorrichtung bekannt. Die Reifendrucksendevorrichtung weist eine Sendeschaltung und eine Antenne auf, wobei die Antenne eine Strahlungselektrode beziehungsweise Schleife aufweist, die eine Schleifenfläche umschließt.

US 2008/0136738 A1 beschreibt eine multifilare Helix-Antenne, die um einen Zylinder gewundene helikale Elemente sowie Zuleitungselemente und verbindende Elemente, die den Zylinder umschließen, umfasst, wobei die elektrische Länge der Antenne ein ungeradzahligfaches der halben Wellenlänge ist.

Grundsätzlich sind auf dem Gebiet der Nachrichtentechnik auch Antennen bekannt, bei denen die elektrische Schleife in einer Ebene verläuft, die senkrecht zur Leiterplattenebene ist.

Der vorliegenden Erfindung liegt daher die Aufgabe zugrunde, eine Antenne für einen Empfänger oder einen Sender in einem Kraftfahrzeug, insbesondere für ein Reifenzustandsüberwachungssystem anzugeben, die eine besonders sichere und störungsfreie Kommunikation zwischen den beteiligten Kommunikationspartnern, wie beispielsweise der zentralen oder dezentralen Empfangseinrichtung im Fahrzeug und dem oder den Sensoren in den Reifen ermöglicht.

Die erfindungsgemäße Aufgabe wird durch eine Antenne mit den Merkmalen von Anspruch 1 gelöst. In den abhängigen Ansprüchen sind besonders vorteilhafte Ausgestaltungen der Erfindung angegeben.

Eine erfindungsgemäße Antenne für einen Empfänger oder Sender in einem Kraftfahrzeug, insbesondere für ein Reifenzustandsüberwachungssystem, beispielsweise Reifendrucküberwachungssystem, weist gattungsgemäß eine elektrisch leitende Schleife auf, die eine Fläche zum Durchtritt elektromagnetischer Wellen, die in einer Wechselwirkung mit einem elektrischen Stromfluss durch die Schleife stehen, umschließt. Die Schleife weist eine Anschlussseite auf, über welche ein elektrischer Strom induktiv oder durch wenigstens einen elektrischen Anschluss in die Schleife einleitbar ist oder aus dieser ausleitbar ist. Somit ist es möglich, über die Einleitung oder Ausleitung mit der Schleife zu senden oder zu empfangen.

Erfindungsgemäß ist nun die von der elektrisch leitenden Schleife umschlossene Fläche über eine Verwindungsachse verwunden, die senkrecht oder winklig auf der Anschlussseite steht. Dies bedeutet, dass die Schleife nicht mehr innerhalb einer Ebene, beispielsweise Leiterplattenebene, positioniert ist. Hierdurch ist es möglich, eine weitgehende Richtungsunabhängigkeit bezüglich des Sende- oder Empfangsverhaltens der Schleife zu erzielen. So durchlaufen nämlich auch elektromagnetische Wellen die von der Schleife eingeschlossene Fläche, wenn diese elektromagnetischen Wellen in ihrer Richtung parallel zur Anschlussseite der Schleife ausgerichtet sind.

Ferner ist es möglich, die Schleife auf der Leiterplattenebene aufzustellen, sodass eine auf einem Fahrzeugrahmen aus Metall montierte Leiterplatte nicht zu einem schlechteren Sende- oder Empfangsverhalten der Schleife führt. Besonders günstig ist hierfür die Schleife mit ihrer Anschlussseite elektrisch leitend oder induktiv an der Leiterplatte oder einem hierauf vorgesehenen elektronischen Baustein angeschlossen, wobei die Verwindungsachse und die Schleife senkrecht oder winklig auf einer Grundfläche der Leiterplatte stehen.

Gemäß einer besonders vorteilhaften Ausführungsform bildet die Leiterplatte oder ein darauf vorgesehener elektronischer Baustein eine elektrisch leitende Koppelschleife, die mit der auf der Leiterplatte aufgestellten Schleife induktiv gekoppelt ist, und die Anschlussseite der Schleife und eine ihr zugeordnete Koppelseite der Koppelschleife verlaufen äquidistant, insbesondere parallel zueinander.

Gemäß der Erfindung wird die Anschlussseite der Schleife durch eine Gerade, eine ein- oder mehrfach abgewinkelte Linie oder eine Kurve gebildet und die Schleife weist eine der Anschlussseite gegenüberstehende Seite auf, die ebenfalls durch eine Gerade, eine ein- oder mehrfach abgewinkelte Linie oder Kurve gebildet wird, wobei die Anschlussseite und die gegenüberliegende Seite der Schleife innerhalb von zwei zueinander parallelen beziehungsweise planparallelen Ebenen verlaufen.

Günstig ist es, wenn die Antenne einen Grundkörper aufweist, der wenigstens über einen Teil seines Umfangs insbesondere eine zumindest im Wesentlichen zylindrische oder kegelstumpfförmige Form aufweist, und die Schleife auf der äußeren Oberfläche des Grundkörpers aufgebracht ist. Der Grundkörper kann beispielsweise als Hohlkörper ausgeführt sein, der einen Innenraum umschließt. Gemäß einer Ausführungsform ist der Grundkörper zumindest an einer Seite zu dem Innenraum hin geöffnet und diese geöffnete Seite weist einen diagonal durch die Öffnung verlaufenden Steg auf, der einen Abschnitt, insbesondere eine (gesamte) Seite der Schleife, vorteilhaft deren Anschlussseite, trägt.

Gemäß einer Ausführungsform der Erfindung ist die Schleife über ihrem Umfang einmal oder mehrfach, insbesondere genau zweimal unterbrochen, wobei die Unterbrechung vorteilhaft außerhalb der Anschlussseite vorgesehen ist. Die wenigstens eine Unterbrechung oder alle Unterbrechungen können mittels jeweils wenigstens eines elektrischen Widerstands und/oder mittels jeweils wenigstens eines Kondensators überbrückt sein. Besonders günstig kann die wenigstens eine Unterbrechung einen Interdigitalkondensator bilden. Auch eine Überbrückung der Unterbrechung mittels einer Induktivität durch entsprechende Wicklungen oder Spulen auf beiden Seiten der Unterbrechung ist möglich.

Durch die Unterbrechung und deren Überbrückung ist eine Abstimmung der Antenne möglich.

Eine Ausführungsform der Erfindung sieht vor, dass auf dem Grundkörper, auf dem die Schleife aufgebracht ist, eine weitere Antenne aufgebracht ist, die elektrisch an der Schleife angeschlossen oder elektrisch von dieser isoliert ist. Die wenigstens eine weitere Antenne kann dabei, muss jedoch nicht, in einer anderen Form als eine Schleifenantenne ausgeführt sein, beispielsweise als Stabantenne oder Fraktalantenne.

Die Schleife und insbesondere auch die wenigstens eine weitere Antenne können durch Laserdirektstrukturierung auf den Grundkörper aufgebracht sein. Dies ist besonders dann vorteilhaft, wenn der Grundkörper gemäß einer Ausführungsform, die auch unabhängig von dieser Laserdirektstrukturierung vorgesehen sein kann, aus Kunststoff hergestellt ist.

Ein erfindungsgemäßer Empfänger, insbesondere eines Reifenzustandsüberwachungssystems, ist dadurch gekennzeichnet, dass er eine erfindungsgemäße Antenne der hier beschriebenen Art aufweist. Ferner zeichnet sich ein erfindungsgemäßes Reifenzustandsüberwachungssystem durch eine erfindungsgemäße Antenne, insbesondere einen Sender und/oder einen Empfänger mit einer erfindungsgemäßen Antenne aus und ist insbesondere als Reifendrucküberwachungssystem ausgeführt, um den Druck in einem oder mehreren Fahrzeugreifen zu überwachen. In der Regel wird ferner wenigstens ein Reifenzustandssensor, insbesondere Reifendrucksensor vorgesehen sein, der in Kommunikationsverbindung mit der Antenne des Empfängers und/oder Senders steht und/oder in eine solche schaltbar ist.

Die Erfindung soll nachfolgend anhand eines Ausführungsbeispiels und den Figuren exemplarisch beschrieben werden.

Es zeigen:
- Figur 1: eine dreidimensionale Draufsicht auf ein Ausführungsbeispiel für eine erfindungsgemäße Antenne;
- Figur 2: die Antenne aus der Figur 1 in einer Ansicht von unten;
- Figur 3: die Antenne aus der Figur 1 in einer Ansicht von hinten;
- Figur 4: ein Beispiel für einen durch eine Unterbrechung der Schleife ausgebildeten Interdigitalkondensator;
- Figur 5: ein Kraftfahrzeug mit einem erfindungsgemäßen Reifenzustandsüberwachungssystem.

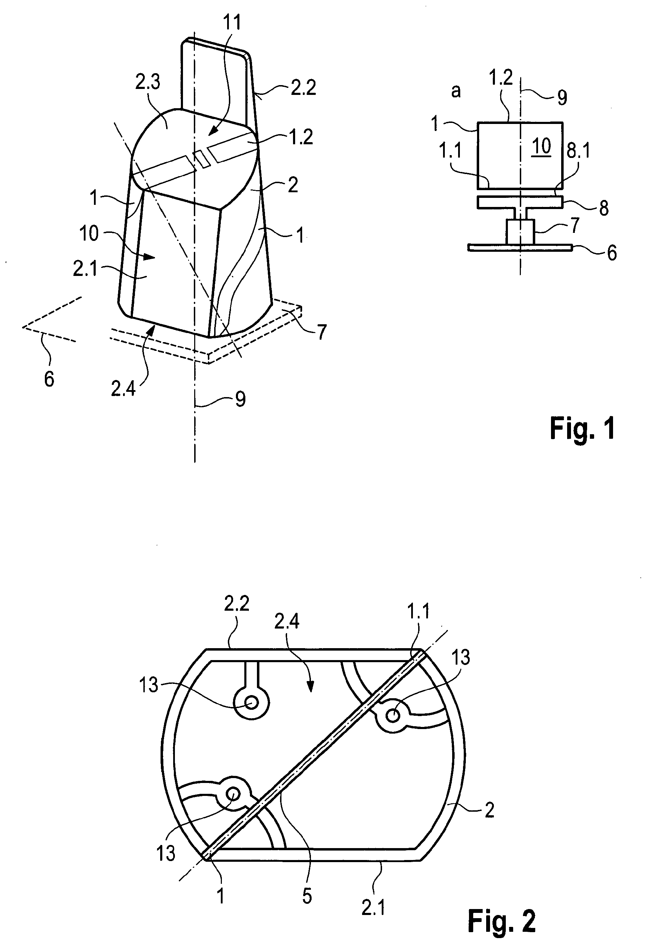

In der Figur 1 ist eine erfindungsgemäß ausgeführte Antenne für einen Empfänger oder Sender in einem Kraftfahrzeug, hier für ein Reifenzustandsüberwachungssystem, dargestellt. Die Antenne weist eine elektrisch leitende Schleife 1 auf, die im gezeigten Ausführungsbeispiel auf einem Grundkörper 2, der beispielsweise aus Kunststoff hergestellt ist, aufgebracht ist. Der Grundkörper 2 weist eine im Wesentlichen zylindrische Form auf, wobei über dessen äußeren Umfang zwei einander abgewandte abgeflachte Seiten 2.1 und 2.2 vorgesehen sind. Vorliegend wird die abgeflachte Seite 2.1 als Vorderseite und die abgeflachte Seite 2.2 als Rückseite bezeichnet.

Ferner weist der Grundkörper 2 eine obere Stirnseite 2.3 und eine untere Stirnseite 2.4 auf. Die obere Stirnseite 2.3 ist geschlossen, wohingegen die untere Stirnseite 2.4 geöffnet ist, siehe die Figur 2, die eine Draufsicht auf die untere Stirnseite 2.4 darstellt.

Die elektrisch leitende Schleife 1 erstreckt sich nun zum einen diagonal über die untere Stirnseite 2.4, wofür diese von einem Steg 5 durchkreuzt ist, der sich in Diagonalrichtung von der Vorderseite 2.1 zur Rückseite 2.2 erstreckt. Die über den Steg 5 verlaufende Seite der Schleife 1 ist die Anschlussseite 1.1 der Schleife 1.

Von ihrer Anschlussseite 1.1 erstreckt sich die Schleife 1 über die beiden zylinderförmig gewölbten Oberflächen zwischen der Vorderseite 2.1 und der Rückseite 2.2 auf die obere Stirnseite 2.3. Die der Anschlussseite 1.1 gegenüberliegende Seite 1.2 der Schleife 1 liegt zwar in einer Ebene, die planparallel zu der Ebene der Anschlussseite 1.1 ist, jedoch ist die gegenüberliegende Seite 1.2 winklig verdreht gegenüber der Anschlussseite 1.1, und zwar über der Verwindungsachse 9, die senkrecht auf der Anschlussseite 1.1 steht und senkrecht auf der Grundfläche der schematisch in der Figur 1 dargestellten Leiterplatte 6. In der Figur 1 ist nur die Richtung der Anschlussseite 1.1 durch eine Strichpunktlinie angedeutet.

Aufgrund der in der Figur 1 dargestellten und zuvor beschriebenen Gestaltung der Form der Schleife 1 ist auch die von der Schleife umschlossene Fläche 10, die zum Durchtritt elektromagnetischer Wellen, die eine Wechselwirkung mit einem elektrischen Stromfluss durch Schleife 1 erzeugen, über der Verwindungsachse 9 verwunden. Im gezeigten Ausführungsbeispiel ist die Schleife aus zwei Geraden auf der Anschlussseite 1.1 und der gegenüberstehenden Seite 1.2 und zwei die Geraden verbindenden Kurven zusammengesetzt, um die gewünschte Verwendung der Fläche 10 zu erreichen.

Im Detail a der Figur 1 ist die Schleife 1 und ihre Stellung aufgerichtet auf der Leiterplatte 6 nochmals schematisch dargestellt, jedoch ohne die erfindungsgemäße Verwindung der von der Schleife 1 umschlossenen Fläche 10 über der Verwindungsachse 9. Hier erkennt man auch nochmals, dass die Anschlussseite 1.1 und die gegenüberstehende Seite 1.2 der Schleife 1 in zueinander parallelen Ebenen verlaufen. Ferner ist schematisch ein elektronischer Baustein 7 auf der Leiterplatte 6 dargestellt, der in gestrichelter Linie auch in der Hauptansicht der Figur 1 dargestellt ist, und der beispielsweise eine Koppelschleife 8 bildet, die eine Koppelseite 8.1 aufweist, über welche Signale in die Schleife 1 eingekoppelt und/oder aus dieser ausgekoppelt werden, wobei die Koppelseite 8.1 insbesondere parallel zur Anschlussseite 1.1 der Schleife 1 verläuft. Anstelle der Integration in den elektronischen Baustein 7 könnte jedoch die Koppelschleife 8 auch in die Leiterplatte 6 integriert werden oder bei einer Ausführungsform ohne gekoppelte Schleifen eingespart werden. Im letzteren Fall wären entsprechend elektrische Anschlüsse an der Anschlussseite 1.1 der Schleife 1 vorgesehen.

Die hier als geschlossene Schleife ausgeführte Koppelschleife 8, das heißt, die Koppelschleife 8 umschließt eine Fläche, könnte auch als offene, lang ausgestreckte Koppelschleife ausgeführt sein, die beispielsweise an einem Ende in einem Masseanschluss oder Anschluss mit vorgegebener elektrischer Spannung mündet. Auch könnten elektrische Komponenten, wie ein oder mehrere Kondensatoren, Spulen oder ein oder mehrere elektrische Widerstände oder auch andere Komponenten in der Koppelschleife vorgesehen sein.

Der Abstand zwischen der Koppelschleife 8 bzw. deren Koppelseite 8.1 und der Anschlussseite 1.1 der Schleife 1 beträgt insbesondere 0,2 bis 0,7, insbesondere 0,4 bis 0,6, vorteilhaft 0,5 mm.

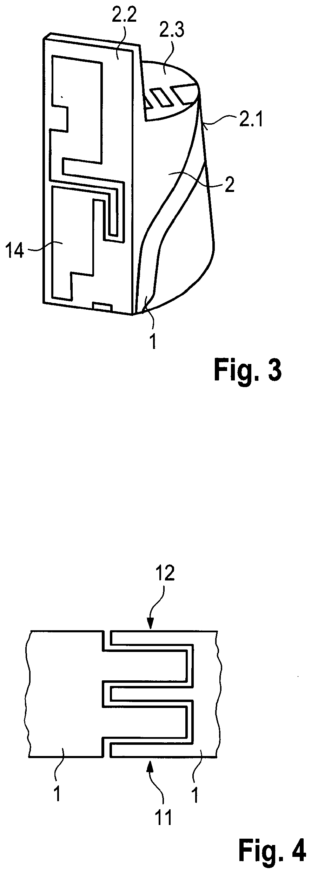

Bei dem gezeigten Ausführungsbeispiel weist die Schleife 1 auf der oberen Stirnseite 2.3 des Grundkörpers 2 zwei Unterbrechungen 11 auf, die über hier nicht näher dargestellte elektrische Widerstände und/oder Kondensatoren überbrückt werden können, um die Schleife 1 abzustimmen, je nach Anwendungsfall. Eine Alternative zur Abstimmung ist in der Figur 4 dargestellt, wo die Unterbrechung 11 einen Interdigitalkondensator 12 bildet. Das bedeutet, dass die einander zugewandten freien Enden der Schleife 1 ineinander eingreifende, mit Abstand zueinander positionierte Finger aufweisen.

In der Figur 2 sind ferner Anschlussbuchsen 13 des Grundkörpers 2 exemplarisch dargestellt, die dazu dienen, dass der Grundkörper 2 auf der Leiterplatte 6 oder dem elektronischen Baustein 7 befestigt werden kann, beispielsweise durch in die Buchsen 13 eingreifende Schrauben.

In der Figur 3 ist dargestellt, dass die Rückseite 2.2 des Grundkörpers 2 mit einer weiteren Antenne 14 versehen ist. Die weitere Antenne 14 hat die Form einer Fraktalantenne. Die Rückseite 2.2 ist in dem gezeigten Ausführungsbeispiel über den restlichen Bereich des Grundkörpers 2 hinaus verlängert, um eine größere Fläche für die weitere Antenne 14 zu bieten. Dies ist jedoch nicht zwingend notwendig.

Sowohl die Schleife 1 als auch die weitere Antenne 14 können beispielsweise durch Laserdirektstrukturierung auf die Oberfläche des Grundkörpers 2 aufgebracht werden. Jedoch sind auch andere Aufbringungsverfahren möglich.

Durch die Gestalt des Grundkörpers 2, der insbesondere senkrecht auf der Leiterplatte 6 steht, ist es besonders leicht möglich, eine erfindungsgemäße Schleife 1 auf der Leiterplatte 6 aufzustellen. Es ist eine kostengünstige und stabile Ausführungsform möglich.

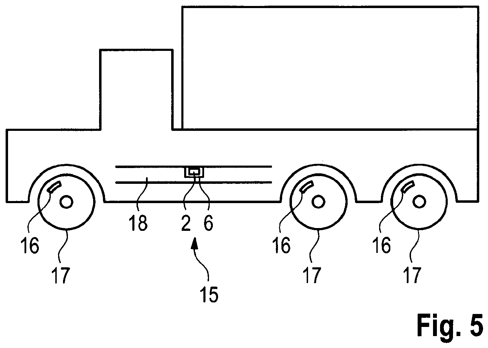

In der Figur 5 ist exemplarisch ein Kraftfahrzeug dargestellt, in dem ein erfindungsgemäßes Reifenzustandsüberwachungssystem integriert ist. Das Reifenzustandsüberwachungssystem weist eine Empfangseinrichtung 15 und eine Vielzahl von Reifenzustandssensoren 16 in den verschiedenen Reifen 17 auf. Die Empfangseinrichtung 15 ist auf einem Rahmen 18 des Fahrzeugs, der aus Metall hergestellt ist, aufgebracht. Die Leiterplatte 6 liegt beispielsweise flächig auf dem Rahmen 18 auf. Da jedoch der Grundkörper 2 mit der hier nicht näher dargestellten Schleife der erfindungsgemäßen Antenne winklig beziehungsweise senkrecht auf der Leiterplatte 6 und damit dem Rahmen 15 steht, ist eine drahtlose Kommunikation zwischen den Reifenzustandssensoren 16 und der Empfangseinrichtung 15 ohne weitere Störung durch die Wirkung des Rahmens 18 auf die elektromagnetischen Wellen möglich.

## Patentansprüche

1. Antenne für einen Empfänger oder Sender in einem Kraftfahrzeug
1.1 mit einer elektrisch leitenden Schleife (1), die eine Fläche (10) zum Durchtritt elektromagnetischer Wellen, die in einer Wechselwirkung mit einem elektrischen Stromfluss durch die Schleife (1) stehen, umschließt; wobei
1.2 die Schleife (1) eine Anschlussseite (1.1) aufweist, über welche ein elektrischer Strom induktiv oder durch wenigstens einen elektrischen Anschluss in die Schleife (1) einleitbar oder aus dieser ausleitbar ist; wobei
1.3 die von der Schleife (1) umschlossene Fläche (10) über einer Verwindungsachse (9) verwunden ist, die senkrecht oder winklig auf der Anschlussseite (1.1) steht;
**dadurch gekennzeichnet, dass**
1.4 die Anschlussseite (1.1) der Schleife (1) durch eine Gerade, eine einfach oder mehrfach abgewinkelte Linie oder eine Kurve gebildet wird und die Schleife (1) eine der Anschlussseite (1.1) gegenüberstehende Seite (1.2) aufweist, die ebenfalls durch eine Gerade, eine einfach oder mehrfach abgewinkelte Linie oder eine Kurve gebildet wird, wobei die Anschlussseite (1.1) und die gegenüberstehende Seite (1.2) innerhalb von zwei zueinander planparallelen Ebenen verlaufen.

2. Antenne gemäß Anspruch 1, **dadurch gekennzeichnet, dass** die Antenne eine elektrische Leiterplatte (6) aufweist, an welcher die Schleife (1) mit ihrer Anschlussseite (1.1) elektrisch leitend oder induktiv angeschlossen ist, insbesondere mittels eines elektronischen Bausteins (7), und die Verwindungsachse (9) und die Schleife (1) senkrecht oder winklig auf einer Grundfläche der Leiterplatte (6) stehen.

3. Antenne gemäß Anspruch 2, **dadurch gekennzeichnet, dass** die Leiterplatte (6) oder ein darauf vorgesehener elektronischer Baustein (7) eine elektrisch leitende Koppelschleife (8) bildet, die mit der Schleife (1) induktiv gekoppelt ist, und die Anschlussseite (1.1) der Schleife (1) und eine ihr zugeordnete Koppelseite (8.1) der Koppelschleife (8) äquidistant, insbesondere parallel zueinander verlaufen.

4. Antenne gemäß einem der Ansprüche 1 bis 3, **dadurch gekennzeichnet, dass** die Antenne einen Grundkörper (2) aufweist, der wenigstens über einen Teil seines Umfangs insbesondere eine zumindest im Wesentlichen zylindrische oder kegelstumpfförmige Form aufweist, und die Schleife (1) auf die äußere Oberfläche des Grundkörpers (2) aufgebracht ist.

5. Antenne gemäß Anspruch 4, **dadurch gekennzeichnet, dass** der Grundkörper (2) als Hohlkörper ausgeführt ist, der einen Innenraum umschließt, wobei der Grundkörper (2) zumindest an einer Seite (2.4) zu dem Innenraum hin geöffnet ist, und diese geöffnete Seite (2.4) einen diagonal durch die Öffnung verlaufenden Steg (5) aufweist, der einen Abschnitt, insbesondere eine Seite der Schleife (1), wie deren Anschlussseite (1.1), trägt.

6. Antenne gemäß einem der Ansprüche 1 bis 5, **dadurch gekennzeichnet, dass** die Schleife (6) über ihrem Umfang einmal oder mehrfach, insbesondere zweimal, unterbrochen ist, insbesondere außerhalb der Anschlussseite (1.1).

7. Antenne gemäß Anspruch 6, **dadurch gekennzeichnet, dass** die wenigstens eine Unterbrechung (11) mittels eines elektrischen Widerstands, einer Induktivität und/oder mittels eines Kondensators überbrückt ist.

8. Antenne gemäß einem der Ansprüche 6 oder 7, **dadurch gekennzeichnet, dass** die wenigsten eine Unterbrechung (11) einen Interdigitalkondensator (12) bildet.

9. Antenne gemäß einem der Ansprüche 4 bis 8, **dadurch gekennzeichnet, dass** auf dem Grundkörper (2) wenigstens eine weitere Antenne (14) aufgebracht ist, die elektrisch an der Schleife (1) angeschlossen oder elektrisch von dieser isoliert ist.

10. Antenne gemäß Anspruch 9, **dadurch gekennzeichnet, dass** die wenigstens eine weitere Antenne (14) in einer anderen Form als eine Schleifenantenne ausgeführt ist.

11. Antenne gemäß einem der Ansprüche 4 bis 10, **dadurch gekennzeichnet, dass** die Schleife (1) und insbesondere die wenigstens eine weitere Antenne (14) durch Laserdirektstrukturierung auf dem Grundkörper (2), der insbesondere aus Kunststoff hergestellt ist, aufgebracht ist/sind.

12. Empfänger, insbesondere eines Reifenzustandsüberwachungssystems, mit einer Antenne gemäß einem der Ansprüche 1 bis11.

13. Reifenzustandsüberwachungssystem mit einem Empfänger und/oder einem Sender, der/die eine Antenne gemäß einem der Ansprüche 1 bis 11 aufweist/aufweisen.

14. Reifenzustandsüberwachungssystem gemäß Anspruch 13, **dadurch gekennzeichnet, dass** ferner wenigstens ein Reifenzustandssensor (16), insbesondere Reifendrucksensor, vorgesehen ist, der in Kommunikationsverbindung mit der Antenne steht und/oder in eine solche schaltbar ist.

## Claims

1. An antenna for a receiver or transmitter in a motor vehicle
1.1 comprising an electrically conductive loop (1), which encloses an area (10) for the passage of electromagnetic waves which interact with an electrical current flow through the loop (1); wherein
1.2 the loop (1) has a connection side (1.1), via which an electrical current can be introduced inductively or through at least one electrical terminal into the loop (1) or discharged therefrom; wherein
1.3 the area (10) enclosed by the loop (1) is twisted via a twist axis (9), which is perpendicular or at an angle to the connection side (1.1);
**characterized in that**
1.4 the connection side (1.1) of the loop (1) is formed by a straight line, a line angled once or multiple times, or a curve, and the loop (1) has a side (1.2) opposite to the connection side (1.1), which is also formed by a straight line, a line angled once or multiple times, or a curve, wherein the connection side (1.1) and the opposite side (1.2) extend within two planes plane-parallel to one another.

2. The antenna according to Claim 1, **characterized in that** the antenna has an electrical circuit board (6), to which the loop (1) is connected in an electrically conductive or inductive manner with its connection side (1.1), in particular by means of an electronic component (7), and the twist axis (9) and the loop (1) are perpendicular or at an angle to a footprint of the circuit board (6).

3. The antenna according to Claim 2, **characterized in that** the circuit board (6) or an electronic component (7) provided thereon forms an electrically conductive coupling loop (8), which is inductively coupled to the loop (1), and the connection side (1.1) of the loop (1) and a coupling side (8.1) of the coupling loop (8) associated therewith extend equidistantly, in particular in parallel to one another.

4. The antenna according to any one of Claims 1 to 3, **characterized in that** the antenna has a main body (2), which has in particular an at least essentially cylindrical or truncated- conical shape over at least a part of its circumference, and the loop (1) is applied to the outer surface of the main body (2).

5. The antenna according to Claim 4, **characterized in that** the main body (2) is embodied as a hollow body, which encloses an interior, wherein the main body (2) is open toward the interior at least on one side (2.4), and this open side (2.4) has a web (5) extending diagonally through the opening, which supports a section, in particular one side of the loop (1), such as its connection side (1.1).

6. The antenna according to any one of Claims 1 to 5, **characterized in that** the loop (6) is interrupted once or multiple times over its circumference, in particular twice, in particular outside the connection side (1.1).

7. The antenna according to Claim 6, **characterized in that** the at least one interruption (11) is bridged by means of an electrical resistor, an inductor, and/or by means of a capacitor.

8. The antenna according to any one of Claims 6 or 7, **characterized in that** the at least one interruption (11) forms an interdigital capacitor (12).

9. The antenna according to any one of Claims 4 to 8, **characterized in that** at least one further antenna (14), which is electrically connected to the loop (1) or is electrically insulated therefrom, is applied to the main body (2).

10. The antenna according to Claim 9, **characterized in that** the at least one further antenna (14) is embodied in a form other than a loop antenna.

11. The antenna according to any one of Claims 4 to 10, **characterized in that** the loop (1) and in particular the at least one further antenna (14) is/are applied by laser direct structuring on to the main body (2), which is produced from plastic in particular.

12. A receiver, in particular of a tire status monitoring system, comprising an antenna according to any one of Claims 1 to 11.

13. A tire status monitoring system comprising a receiver and/or a transmitter, which has/have an antenna according to any one of Claims 1 to 11.

14. The tire status monitoring system according to Claim 13, **characterized in that** furthermore at least one tire status sensor (16), in particular a tire pressure sensor, is provided, which has a communication connection with the antenna and/or is switchable into such a connection.

## Revendications

1. Antenne pour un récepteur ou un émetteur dans un véhicule à moteur
1.1 avec une boucle (1) conductrice électrique qui délimite une surface (10) pour le passage d'ondes électromagnétiques qui interagissent avec un flux de courant électrique passant à travers la boucle (1),
1.2 la boucle (1) présentant un côté de connexion (1.1) par lequel un courant électrique peut être amené dans la boucle (1) ou sortir de celle-ci par induction ou par au moins une connexion électrique,
1.3 la surface (10) renfermée par la boucle (1) étant vrillée autour d'un axe de vrillage (9) perpendiculaire ou formant un angle par rapport au côté de connexion (1.1),
**caractérisée en ce que**
1.4 le côté de connexion (1.1) de la boucle (1) est formé par une droite, une ligne formant un ou plusieurs angles ou une courbe et la boucle (1) présente un côté (1.2) opposé au côté de connexion (1.1) qui est également formé par une droite, une ligne formant un ou plusieurs angles ou une courbe, le côté de connexion (1.1) et le côté opposé (1.2) se trouvant à l'intérieur de deux plans parallèles l'un à l'autre.

2. Antenne selon la revendication 1, **caractérisée en ce qu'**elle présente une carte de circuits électriques (6) sur laquelle la boucle (1) est connectée par son côté de connexion (1.1) de façon conductrice électrique ou par induction, en particulier au moyen d'un composant électronique (7), et l'axe de torsion (9) et la boucle (1) sont perpendiculaires ou forment un angle sur une surface de base de la carte de circuits (6).

3. Antenne selon la revendication 2, **caractérisée en ce que** la carte de circuits (6) ou un composant électronique (7) prévu sur celle-ci forme une boucle de couplage (8) conductrice électrique qui est couplée par induction avec la boucle (1), et le côté de connexion (1.1) de la boucle (1) et un côté de couplage (8.1) de la boucle de couplage (8) qui lui est associé sont équidistants, en particulier parallèles l'un à l'autre.

4. Antenne selon l'une des revendications 1 à 3, **caractérisée en ce qu'**elle présente un corps de base (2) qui présente au moins sur une partie de sa circonférence, en particulier, une forme au moins sensiblement cylindrique ou tronconique, et la boucle (1) est posée sur la surface extérieure du corps de base (2).

5. Antenne selon la revendication 4, **caractérisée en ce que** le corps de base (2) est réalisé comme un corps creux qui renferme un espace intérieur, le corps de base (2) étant ouvert au moins sur un côté (2.4) vers l'intérieur, et ce côté ouvert (2.4) présentant une barrette (5) passant en diagonale à travers l'ouverture, qui porte une partie, en particulier un côté de la boucle (1), comme son côté de connexion (1.1).

6. Antenne selon l'une des revendications 1 à 5, **caractérisée en ce que** la boucle (6) est interrompue une fois ou plusieurs fois, en particulier deux fois, sur sa circonférence, en particulier en dehors du côté de connexion (1.1).

7. Antenne selon la revendication 6, **caractérisée en ce que** l'au moins une interruption (11) est franchie au moyen d'une résistance électrique, d'une inductance et/ou d'un condensateur.

8. Antenne selon l'une des revendications 6 ou 7, **caractérisée en ce que** l'au moins une interruption (11) forme un condensateur interdigital (12).

9. Antenne selon l'une des revendications 4 à 8, **caractérisée en ce qu'**est placée sur le corps de base (2) au moins une autre antenne (14) qui est connectée électriquement à la boucle (1) ou isolée électriquement de celle-ci.

10. Antenne selon la revendication 9, **caractérisée en ce que** l'au moins une autre antenne (14) est réalisée sous une autre forme que celle d'une antenne à boucle.

11. Antenne selon l'une des revendications 4 à 10, **caractérisée en ce que** la boucle (1) et en particulier l'au moins une autre antenne (14) sont appliquées par structuration directe par laser sur le corps de base (2), qui est en particulier fait de matière plastique.

12. Récepteur, en particulier d'un système de surveillance de l'état des pneus, avec une antenne selon l'une des revendications 1 à 11.

13. Système de surveillance de l'état des pneus avec un récepteur et/ou un émetteur qui présente(nt) une antenne selon l'une des revendications 1 à 11.

14. Système de surveillance de l'état des pneus selon la revendication 13, **caractérisé en ce qu'**il est prévu en outre un capteur d'état des pneus (16), en particulier un capteur de pression des pneus, qui est en communication avec l'antenne et/ou peut être mis en circuit dans une telle communication.
